Europäisches Patentamt

European Patent Office

Office européen des brevets

(11) Numéro de publication: **0 345 108**
**A1**

# (12) DEMANDE DE BREVET EUROPEEN

(21) Numéro de dépôt: **89401304.4**

(22) Date de dépôt: **10.05.89**

(51) Int. Cl.⁴: **G 07 F 7/08**

(30) Priorité: **30.05.88 FR 8807176**
**25.11.88 FR 8815466**

(43) Date de publication de la demande:
**06.12.89 Bulletin 89/49**

(84) Etats contractants désignés:
**AT BE CH DE ES FR GB GR IT LI LU NL SE**

(71) Demandeur: **ELECTRONIQUE SERGE DASSAULT**
**55, quai Marcel Dassault**
**F-92214 Saint-Cloud (FR)**

(72) Inventeur: **Collin, Thierry**
**Tripode LB 88, rue Sylvestre**
**F-92400 Courbevoie (FR)**

(74) Mandataire: **Plaçais, Jean-Yves et al**
**Cabinet Netter 40, rue Vignon**
**F-75009 Paris (FR)**

(54) **Système de transaction du type portemonnaie électronique.**

(57) Une carte (2) possédant un microcircuit de mémoire (20) à accès contrôlé par logique câblée au microprocesseur (21) peut coopérer avec un terminal (1). La mémoire de technologie epROM (ou e²pROM) comporte des mots de valeur (par exemple de trente deux bits, dont vingt cinq bits de valeur, quatre bits servant à coder l'unité de valeur affectée à chacun de ces bits, et un bit de validation). En chargeant la mémoire d'une pluralité de mots possédant la suite d'unités de valeur échelonnée suivant les puissances successives de 2, des moyens de calcul peuvent décomposer d'une manière simple tout montant de transaction inférieur à la valeur maximale de la carte sous forme binaire, en consommant pour chaque transaction au plus un seul bit pour les unités de valeur, sauf éventuellement la plus forte.

FIG.1

**Description**

## Système de transaction du type porte-monnaie électronique

L'invention concerne le domaine technique des cartes à microcircuits (puces), ici nommées plus brièvement "carte(s)". L'invention intéresse plus particulièrement leur application comme moyen de paiement.

A cet effet, on utilise largement les cartes bancaires à piste magnétique. De premiers pas sont effectués pour passer à des cartes bancaires à microcircuits ou à puces. Dans ce dernier type de cartes, la mémoire traite une somme d'argent comme un nombre, codé sur plusieurs octets ou cellules de mémoire, à la façon d'une écriture comptable ou d'un chèque. Il n'y a donc pas de lien simple entre chaque bit de mémoire et une unité de valeur monétaire. Il est alors nécessaire de s'assurer de la confiance (du crédit) que l'on fait à l'utilisateur de la carte ainsi qu'à la carte elle-même. Le moyen le plus courant utilisé pour cela est le code confidentiel. Et l'on sait que la vérification d'un code confidentiel implique une procédure qui alourdit le maniement de la carte.

Il est possible, dans une certaine mesure, d'éviter le recours systématique au code confidentiel, avec les cartes dites "pré-payées". Dans celles-ci, chaque bit de mémoire possède une valeur fixée à l'avance. Comme le nom l'indique, le possesseur d'une telle carte en paie la contre-valeur avant de s'en servir. La confiance accordée à la carte elle-même est donc totale. Et, comme les sommes en jeu sont relativement faibles, il n'est pas nécessaire de vérifier que son détenteur en est le possesseur légitime.

Les cartes dites "télé-cartes", du type pré-payé, fonctionnent actuellement en France avec les appareils de téléphone public. Leur mise en oeuvre est simple, car toute dette téléphonique se définit comme un nombre d'unités téléphoniques à payer.

Le besoin se fait actuellement sentir de cartes du type pré-payé, mais qui conviennent à des applications plus larges que ces "télécartes". En d'autres termes, il s'agit de faire d'une carte un porte-monnaie ou portefeuille électronique.

L'un des problèmes que l'on rencontre alors est d'optimiser la carte, sachant que sa capacité de mémoire est limitée, et qu'est également limité le nombre de rechargements que l'on pourra effectuer dans la carte. D'autres facteurs interviennent, comme le fait que la mémoire est de technologie epROM, ou bien de technologie eepRom, également notée $e^2pROM$. Il convient aussi de distinguer entre les cartes qui contiennent une mémoire associée à une logique câblée, en général sur une seule puce, et les cartes qui contiennent une mémoire et un microprocesseur en une seule puce ou bien en deux puces séparées.

D'un autre côté, il est nécessaire en pratique d'éviter tout "rendu de monnaie" lors des transactions. Ceci permet de réserver les rechargements de la carte au seul cas où l'usager désire acquérir de nouvelles liquidités (dans la carte), cette opération pouvant nécessiter un contrôle du crédit accordé à cet usager.

La présente invention a pour but d'apporter des solutions à ces problèmes.

L'invention concerne donc un système de transactions, du type comprenant au moins un terminal et une carte à microcircuits propre à coopérer avec ce terminal. La carte comprend une mémoire à écriture permanente, éventuellement renouvelable, $(e^2pROM)$, dont certains bits au moins se voient affecter une unité de valeur, consommable par écriture.

Selon une caractéristique générale de l'invention, la mémoire contient une zone de codage permettant de définir au moins une valeur de base, à partir de laquelle peut être établie une suite d'unités de valeur, échelonnées suivant les puissances successives de 2. Cette mémoire contient également une pluralité de mots de valeur, associés chacun à l'une des unités de valeur, et contenant chacun un nombre prédéterminé de bits de valeur possédant cette même unité de valeur. Enfin, le système comprend des moyens de calcul propres à décomposer un montant monétaire en binaire par rapport à ladite valeur de base, et à établir des commandes pour écrire ou non un bit de valeur dans chacun desdits mots de valeur en fonction du bit de poids correspondant dans ladite décomposition, les bits de poids supérieur restant servant, le cas échéant, à l'écriture dans le mot de valeur de poids le plus élevé.

La Demanderesse a observé que statistiquement, la décomposition en binaire d'un montant monétaire donne en moyenne autant de zéros que de uns. En conséquence, une carte constituée comme il vient d'être défini doit permettre en moyenne un nombre de transactions égal au double dudit nombre prédéterminé de bits de valeur que possède chaque mot de valeur.

Très avantageusement, la zone de codage définit au moins quatre, de préférence au moins six unités de valeur consécutives. Cependant, ce nombre n'est pas limitatif. Il peut dépendre du nombre de mots de valeur associées aux unités de valeur des poids les plus faibles. Comme on le verra plus loin, il est possible d'obtenir une unité de valeur auxiliaire égale à la moitié de l'unité de valeur de base, par consommation de bits de valeur déjà établi dans la carte. On verra également qu'il est possible d'associer plusieurs mots de valeur à une même unité de valeur. Enfin, il est possible de prévoir plusieurs ensembles de valeurs opérant comme il vient d'être indiqué à partir de valeurs de base différentes, avec ou sans recouvrement.

De préférence, chaque mot de valeur contient une sous-zone de codage définissant l'unité de valeur qui lui est associée; c'est-à-dire que la zone de codage précitée consiste en la réunion de sous-zones de codage incorporées à chaque mot de valeur.

Il est toutefois envisageable que la zone de codage soit distincte des mots, et définisse leurs unités de valeur respectives par pointage sur ceux-ci, ou par un autre mode de désignation, comme l'association directe d'adresses en mémoire à des multiples de l'unité de valeur de base, qui est alors le seul paramètre à inscrire en mémoire.

L'invention prévoit aussi que, en l'absence de bits de valeur pour certaines unités de valeur, ceux-ci puissent être régénérés par consommation de bits de valeur de poids supérieur. Les différents moyens utilisables pour ce "change automatique" seront explicités plus loin.

L'invention prévoit encore un mode de chargement de la carte, par toute somme désirée définie par l'usager. Sont alors créés, d'une manière complète, un ensemble de mots de valeur, avec tous leurs bits valables. Pour ajuster la valeur pré-chargée dans la carte à la somme désirée, on consomme immédiatement par écriture une somme égale à la différence entre la valeur maximum de la carte et ladite somme désirée.

Il est également prévu que l'on puisse recharger la carte, avant que tous ses bits de valeur ne soient consommés, par une somme désirée. Ce mode de rechargement consiste (du moins pour les cartes de technologie epROM) en la création d'au moins un mot de valeur (en principe dans les poids les plus élevés), par excès, avec consommation immédiate par écriture d'une somme égale à cet excès.

Dans un mode de réalisation particulièrement intéressant, les mots de valeur possèdent chacun un nombre entier d'octets, de préférence 32 bits, à partir desquels on peut définir deux bits réservés, vingt cinq bits de valeur, quatre bits pour définir l'unité de valeur associée au mot, et un bit de validation. Ce bit de validation vient confirmer que la somme indiquée par le mot de valeur a bien été pré-payée, avec certification par l'entité qui garantit le paiement. Cette validation n'est pas nécessairement incorporée à chaque mot de valeur.

Bien que les moyens de calcul nécessaires pour la mise en oeuvre de l'invention puissent être au moins en partie logés dans le terminal, il est considéré comme particulièrement intéressant que ces moyens de calcul soient entièrement logés dans la carte.

La technique de chargement reposant sur le même principe que pour les opérations de débit s'est avérée très intéressante. Toutefois, il peut être souhaitable de disposer d'un mécanisme pour "faire de la monnaie", c'est-à-dire convertir un ou plusieurs bits d'unités de valeur élevée en des bits plus nombreux d'unités de valeur plus faibles, alors que ceux-ci viennent à manquer.

Une variante de l'invention vient proposer à cet égard une technique différente, permettant de généraliser l'usage de la carte comme porte-monnaie électronique, en même temps que pour d'autres applications, et simplifiant son fonctionnement d'une manière substantielle.

Selon la variante très avantageuse de l'invention, le système de transaction comprend en outre des moyens de traitement pour précharger la carte par une somme désirée, exprimée en unités monétaires courantes, et certifiées, et des moyens propres à vérifier que la valeur cumulée des débits suivant les unités de valeur précitées demeure au plus égale à la somme ainsi préchargée.

Ainsi, on peut bénéficier des techniques de sécurité et de certification déjà existantes pour le chargement d'une somme exprimée par exemple en Francs dans la carte. Seul le montant d'un ou plusieurs débits va être exprimé suivant les unités de valeur du "portemonnaie". Et l'on vérifie que le cumul des débits déjà effectués de cette manière n'est pas supérieur au montant monétaire certifié disponible dans la carte.

En principe l'on ne pourra créer de bits de valeur disponibles pour les débits que dans la mesure où le cumul de ces bits de valeur disponibles n'excède pas la somme préchargée dans la carte.

Par ailleurs, il est possible de créer une échelle de mots de valeur en fonction de l'ordre de grandeur du montant d'une transaction à effectuer.

Au lieu de faire de la monnaie dans une unité de valeur donnée, où les bits de valeur viennent à manquer, il suffit de régénérer le mot de valeur correspondant à cette unité de valeur, dans la mesure où la somme préchargée forme contrepartie.

Plus simplement encore, on peut annuler tous les bits de valeur existant encore, et créer une ou plusieurs nouvelles échelles de mots de valeur.

D'autres caractéristiques et avantages de l'invention apparaitront à l'examen de la description détaillée ci-après, et des dessins annexés, sur lesquels :

- les figures 1 et 2 illustrent deux modes de réalisation différents d'un système de transactions permettant la mise en oeuvre de l'invention;

- la figure 3 est un schéma illustrant l'interaction entre la zone de codage et les mots de valeur selon l'invention;

- la figure 4 illustre la structure d'un portemonnaie électronique, selon un mode de réalisation préférentiel de la présente invention;

- la figure 5 illustre un exemple de mise en oeuvre pratique du porte-monnaie électronique selon l'invention, tandis que la figure 5A en illustre une variante;

- la figure 6 illustre un exemple de chargement initial du porte-monnaie électronique de la figure 5;

- la figure 6A illustre quatre transactions différentes réalisables avec le porte-monnaie électronique de la figure 6;

- la figure 7 est le schéma d'un mécanisme de régénération de bits de valeur dans le porte-monnaie selon l'invention;

- la figure 8 illustre différentes conditions applicables pour le rechargement du porte-monnaie électronique selon l'invention en unités de valeur, tandis que la figure 8A compare deux de ces situations; et

- les figures 9 et 9A illustrent deux autres exemples d'application du porte-monnaie électronique selon l'invention.

Les dessins annexés sont pour l'essentiel de caractère certain. Ils font donc partie intégrante de la description, et pourront non seulement servir à mieux faire comprendre celle-ci, mais aussi, le cas échéant, contribuer à la définition de l'invention.

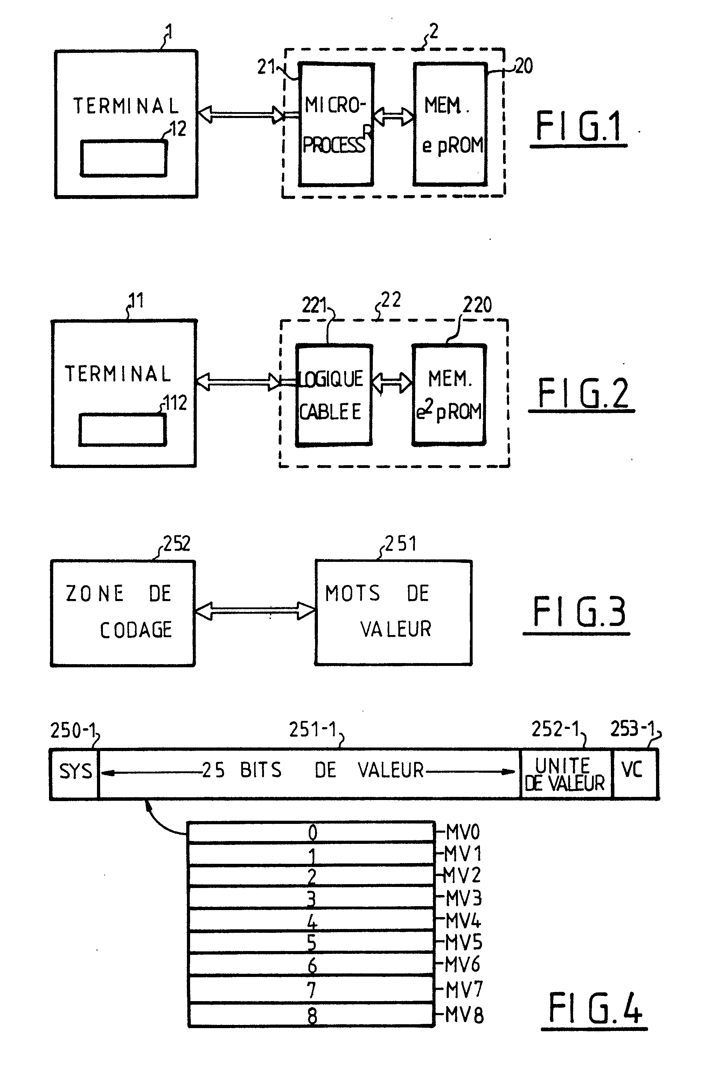

Sur la figure 1, un terminal 1 muni de moyens de traitement et de calcul 12 est en interaction avec une carte 2 possédant un microprocesseur 21 pilotant une mémoire 20, par exemple du type epROM. Il pourrait s'agir d'une carte à deux puces, mais on préfère actuellement intégrer la mémoire et le microprocesseur sur une même puce.

Sur la figure 2, un terminal 11 muni de moyens de traitement et de calcul 112 est accouplé à une carte 22, munie d'une logique câblée 221 contrôlant une mémoire 220, sur une même puce.

La mémoire est par exemple du type eepRom, également notée parfois $e^2$pROM.

Il s'agit là des principaux types de cartes actuellement disponibles sur le marché.

Plus généralement, une carte selon l'invention comprend une mémoire à écriture permanente (renouvelable en technologie $e^2$pROM). Cette expression signifie ici que l'écriture dans la mémoire est substantiellement plus difficile que la lecture de celle-ci. De telles mémoires sont souvent dénommées mémoires mortes programmables.

Les mémoires utilisables selon l'invention sont les mémoires mortes électriquement programmables, dans lesquelles cette opération de programmation commandée électriquement correspond à l'écriture permanente définie ci-dessus. Dans une carte pré-payée, un bit non écrit se voit affecter une unité de valeur, qui va être consommée par l'écriture de ce bit.

La reprogrammation de la carte suppose que l'on soit en mesure de réaliser son effacement. Seules les mémoires $e^2$pROM sont effaçables électriquement. De leur côté, les mémoires de technologie epROM ne seraient effaçables que par d'autres moyens, tels qu'un rayonnement ultraviolet. Les cartes incorporant de telles mémoires epROM sont agencées pour interdire tout effacement.

A cet égard, les dispositions de sécurité considérées comme assurant l'intégrité des puces à l'intérieur de la carte et la surveillance de l'usage correct de la mémoire dans son ensemble sont considérées comme connues de l'homme de l'art.

Selon l'invention (figure 2) la mémoire (20 ou 220) contient une zone de codage 252 d'une suite d'unités de valeur, échelonnées suivant les puissances successives de 2, à partir d'une valeur de base, ainsi qu'une pluralité de mots de valeur 251 associés chacun à l'une des unités de valeur, et contenant un nombre prédéterminé de bits de valeur possédant cette même unité de valeur.

La figure 4 fait apparaître les mots de valeur MV1 à MV8, avec en plus un mot optionnel MV0 dont on verra plus loin le rôle.

Dans un mode de réalisation particulier de l'invention, chaque mot occupe 32 bits. On décrira à titre d'exemple la structure du mot MV1; il comprend :
- deux bits dits de système 250-1 réservés pour des applications de contrôle par exemple,
- vingt cinq bits de valeur 251-1,
- quatre bits d'unité de valeur 252-1, et
- un bit de validation 253-1.

Les quatre bits d'unité de valeur permettent de coder jusqu'à seize niveaux de valeur différents. Dans la version actuelle de l'invention, il est considéré comme suffisant d'utiliser seulement huit niveaux de valeur différents, au moins pour la version de base du porte-monnaie électronique.

Suivant qu'ils sont à l'état vierge ou non écrit (état conventionnellement noté 0) ou à l'état écrit, noté 1, les vingt cinq bits de valeur auront chacun la valeur définie par la zone 252-1, qui est pour le mot MV1 considérée ici la "valeur de base" du porte-monnaie électronique.

Il est prévu d'effectuer une validation en faisant passer à 1 par écriture le bit 253-1, après qu'ait pu être confirmé (dans les conditions définies plus haut) le chargement des bits de valeur suivant l'unité de valeur associée. On notera que le bit de validation 253-1 pourrait être réalisé dans une technologie différente permettant de rendre l'écriture encore plus irréversible, par exemple sous la forme de fusibles incorporés à la puce.

En variante de ce qui précède, les unités de valeur 252 pourraient être non pas incorporées à chaque mot de valeur, mais définies dans une zone de codage 252 placée dans un endroit entièrement séparé de la mémoire. Dans ce cas, la valeur des bits de chaque mot de valeur serait définie par une correspondance entre le mot de valeur et un point de la zone de codage, une telle fonction pouvant être réalisée par exemple par des pointeurs ou par un autre système d'adressage direct, indirect ou implicite. On peut faire de même pour le bit de validation.

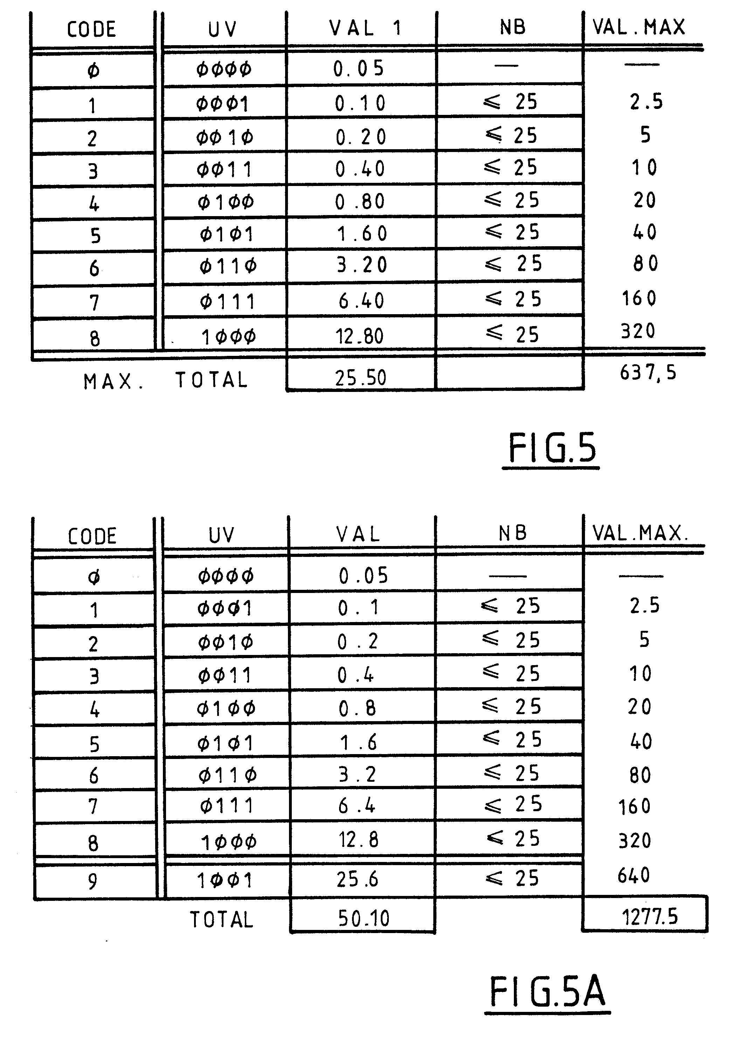

On comprendra mieux sur l'exemple de la figure 5 les capacités du porte-monnaie électronique selon l'invention. Le mot de valeur de rang 1 correspond à l'unité de valeur de base (code UV = 0001), qui correspond par exemple à la valeur 0,10 d'une unité monétaire, telle que le franc. On peut charger jusqu'à vingt cinq bits à cette unité de valeur ce qui correspond à une valeur maximale de 2,5 francs. Le mot de rang 2 possède le code UV = 0010, pour une unité de valeur 0,20, ce qui, pour vingt cinq bits, donne 5 francs. Ainsi de suite, on va jusqu'au mot de valeur de rang 8 dont le code UV est 1000 avec une valeur unitaire de 12,80 francs et une valeur maximale de 320 francs.

Avec un seul mot de valeur par échelon de valeur, la valeur maximale du porte-monnaie électronique ainsi définie est de 637,50 francs.

Sur la figure 5A, se trouve représentée une variante où l'on utilise également le mot de valeur de rang 9, dont la valeur unitaire est 25,6 francs, pour une valeur maximale de 640 francs de ce mot, ce qui porte la valeur d'ensemble du porte-monnaie électronique à 1277,50 francs.

On aura remarqué sur les figures 5 et 5A que le mot de co de 0, optionnel, permet de décomposer des bits de valeur de poids supérieur suivant une unité de valeur égale à la moitié de la valeur de base (code 1), en l'occurrence 0,05 centime. On considère actuellement qu'il n'est pas nécessaire de réaliser un chargement initial de ce mot de valeur de code 0.

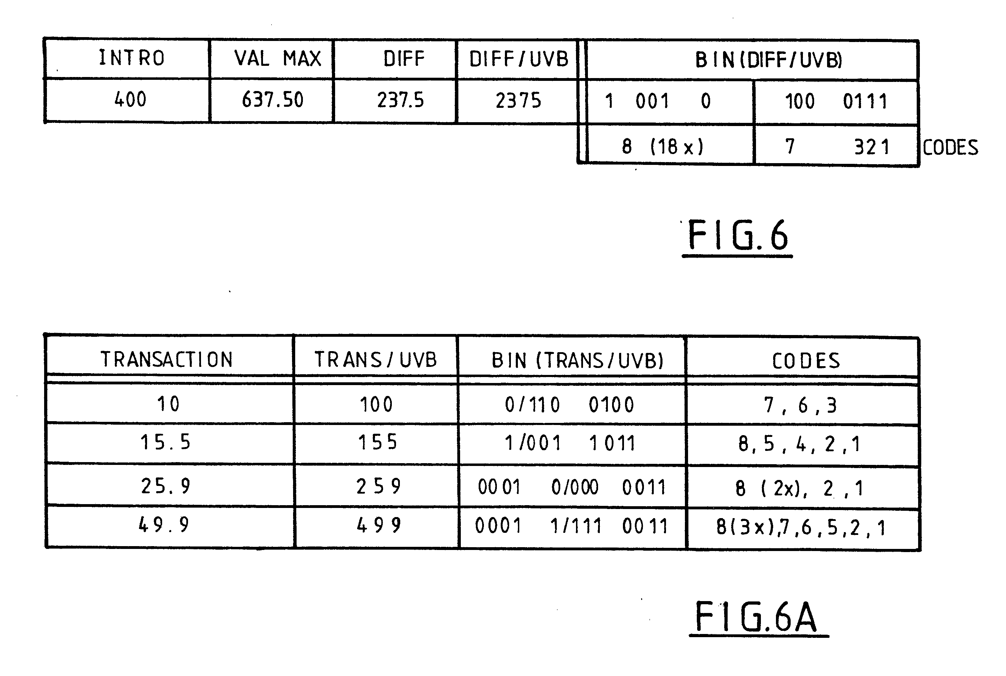

On admet maintenant que la carte est vierge, c'est-à-dire qu'elle n'est chargée par aucune valeur, et l'on décrira en référence à la figure 6 comment l'on peut lui introduire 400 francs.

Il s'agit du porte-monnaie électronique de la figure 5, c'est-à-dire dans lequel on utilise a priori ni le mot de valeur de rang 9, ni celui de code de rang 0.

La valeur à introduire étant de 400 francs et la valeur maximale de 637,50 francs, la différence est de 237,50 francs. Divisée par l'unité de valeur de base UVB, cette différence s'établit à 2375 unités, ce qui converti en binaire donne :
10010 1000111.

Tous les mots de valeur de rang 1 à 9 sont complètement remplis pour ce chargement de la carte. Ensuite, on considère la valeur binaire écrite ci-dessus, de la droite vers la gauche. Chaque fois que l'on rencontre un bit à 1, on consomme par écriture un bit de valeur dans le mot de valeur de rang correspondant. Par exemple, dans le cas de la figure 6, on va consommer un bit de valeur dans les mots de valeur MV1, MV2, MV3 et MV7.

Ce qui reste de la valeur binaire exprimée ci-dessus correspond à 18 unités du mot de valeur de rang 8, et l'on va donc consommer 18 bits de ce même mot.

Après cela, les bits de validation 253 de chacun des mots de valeur sont confirmés.

L'invention fournit un moyen particulièrement simple et élégant de charger une valeur dans le porte-monnaie électronique, en étant sûr de conserver une disponibilité très grande en bits de valeur pour chacun des niveaux ou mots de valeur faisant partie du porte-monnaie électronique.

A partir de là, on peut réaliser des transactions comme illustré sur la figure 6A. Un achat de 10 francs correspond à 100 fois l'unité de valeur de base. Le chiffre 100 est alors écrit en binaire, et la figure 6A montre qu'il faut consommer un bit de valeur dans chacun des mots MV3, MV6 et MV7. La figure 6A contient deux autres exemples, pour des transactions de montants 15,5F, 25,9F et 49,9F.

Ce qui précède s'applique indifféremment aux cartes à mémoire epROM ou e²pROM, à accès contrôlé par logique câblée ou bien microprocesseur.

L'exemple qui vient d'être décrit part du principe que la plupart des transactions réalisées en France s'expriment en décimes, remarque étant faite que les pièces de monnaie actuellement en cours s'arrêtent à 5 centimes.

S'il devient nécessaire de disposer du mot de valeur MV0 dont chaque bit vaut 5 centimes, celui-ci peut être engendré sous la forme de vingt quatre bits de valeur représentant globalement 1,2 franc par consommation d'un bit de valeur du mot MV3 et d'un bit de valeur du mot MV4. Là encore, on admettra initialement vingt cinq bits de valeur dans le mot MV0, puis on consommera immédiatement un bit de valeur pour ramener le nombre à vingt quatre, après quoi le bit de validation 253-0 du mot MV0 sera confirmé. Ceci peut se faire dans le microprocesseur 21, ou par coopération de la logique câblée 221 avec un terminal sécurisé.

Après chargement de 400 francs, comme décrit en référence à la figure 6, on dispose de vingt quatre bits au moins sur chacun des mots de valeur MV1 à MV7, et de neuf bits pour le mot de valeur MV8.

Quel que soit le montant de l'achat, il en résulte que l'on peut garantir au minimum l'exécution de vingt quatre transactions, dans la mesure bien sûr où le montant cumulé de celles-ci ne dépasse pas le montant total chargé.

Un avantage non négligeable de l'invention est que chaque transaction ou achat peut se faire sans rendu de monnaie, et en consommant au plus un bit de valeur de chaque unité de valeur, sauf dans l'unité de valeur la plus élevée.

Si l'on tient compte du fait qu'en pratique, la décomposition en binaire d'un achat ou d'une transaction déterminé a autant de chance de donner des bits 0 que des bits 1, le nombre de transactions possibles peut être plus élevé.

Cependant, il n'est pas certain que la suite de transactions particulières que va réaliser un usager particulier obéisse à cette statistique.

L'invention prévoit donc aussi des moyens de régénération interne de mots de valeur qui seraient vidés prématurément, à l'aide de ceux qui ne le sont pas encore. Il s'agit là d'une sorte de "change automatique d'unités de valeur" qui ne modifie pas la valeur contenue dans la carte (au contraire du "rechargement" décrit plus loin).

La situation de base est celle où le montant total résiduel de la carte n'est pas épuisé, alors que le ou les mots associés à une unité de valeur donnée le sont. Ceci intervient après au moins vingt quatre transactions, dans le cas du chargement initial de la figure 6.

En règle générale, un mot de vingt quatre bits de valeur de l'unité de valeur de rang I peut être validé, en contrepartie de la consommation d'une unité de 1 bit de valeur de l'unité de valeur de rang I+3, ainsi que de 1 bit de valeur de l'unité de valeur de rang I+4.

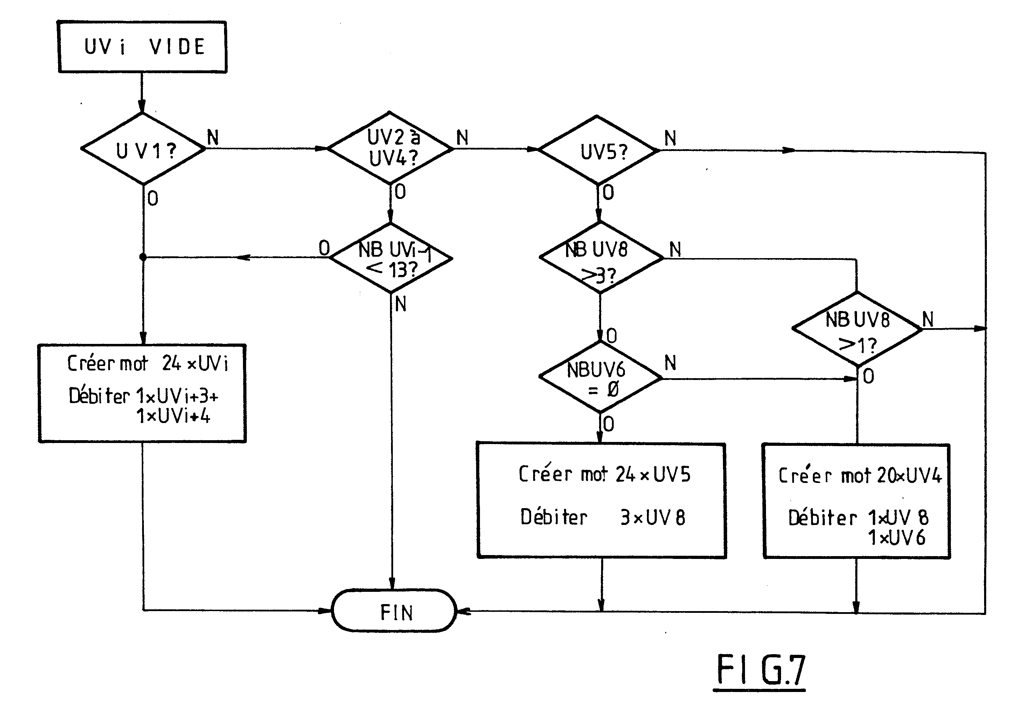

La figure 7 illustre un mode de mise en oeuvre préférentiel de ce mécanisme.

Le point de départ est la constatation que l'unité de valeur de UVi est vide.

S'il s'agit de l'unité de valeur de rang 1, on applique systématiquement le mécanisme exposé ci-dessus.

S'il s'agit de l'une des unités de valeur de poids inférieur, ici UV2 à UV4, on recherche d'abord si le nombre de bits résiduels sur l'unité de valeur de rang immédiatement inférieur est inférieur à treize (c'est-à-dire au plus égal à la moitié de vingt quatre). S'il reste donc plus de la moitié des jetons de l'unité de valeur de rang inférieur, le plus simple sera de consommer deux bits de cette unité de valeur inférieure plutôt qu'un bit de l'unité de valeur manquante.

Dans le cas contraire, on appliquera le mécanisme exposé plus haut.

Pour des unités de valeur de poids supérieur, on ne réali sera un change automatique que si celles-ci n'atteignent pas le poids maximal.

Dans l'exemple de la figure 7, on ne fera rien pour les unités de valeur UV6, UV7 et UV8.

Par contre, pour l'unité de valeur UV5, on détermine d'abord s'il reste plus de trois bits de valeur au niveau UV8. C'est en effet une condition nécessaire pour pouvoir régénérer des unités de valeur au niveau UV5. Si cette condition est vérifiée, on teste aussi si le rang UV6 est vide. Dans ce cas, on créera un mot de vingt quatre unités de valeur de rang UV5 en contrepartie de trois bits de valeur de rang UV8.

S'il restait au contraire des bits de valeur au rang UV6, on préfèrera créer un mot de vingt bits de valeur de rang UV4 en contrepartie d'un bit de valeur de rang UV8 et d'un bit de valeur de rang UV6.

Enfin, s'il ne restait qu'au plus un bit de valeur de rang UV8, on ne fera rien, car il est alors inopportun de consommer ce bit de valeur.

Globalement, le change automatique d'unités de valeur s'effectue donc suivant le mécanisme précité, avec des modulations pouvant tenir compte :
- pour les unités de valeur de poids inférieur à la présence de la moitié des bits de valeur au rang immédiatement plus bas, et
- pour les unités de valeur de poids supérieur, à la présence de bits en nombre insuffisant dans les unités de valeur encore supérieures pour réaliser l'opération de change automatique.

Dans le cas d'une carte e$^2$pROM on pourra avantageusement reconfigurer ses mots de valeur de manière optimale, puisque leur effacement électrique est possible. L'opération est alors assimilable au rechargement décrit ci-après, mais sans modification de valeur.

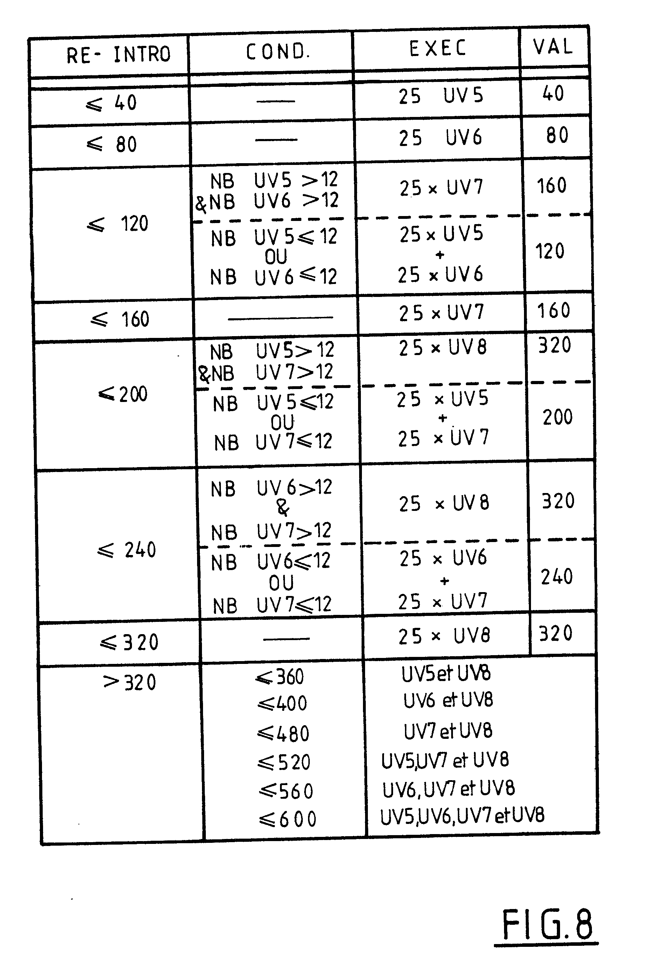

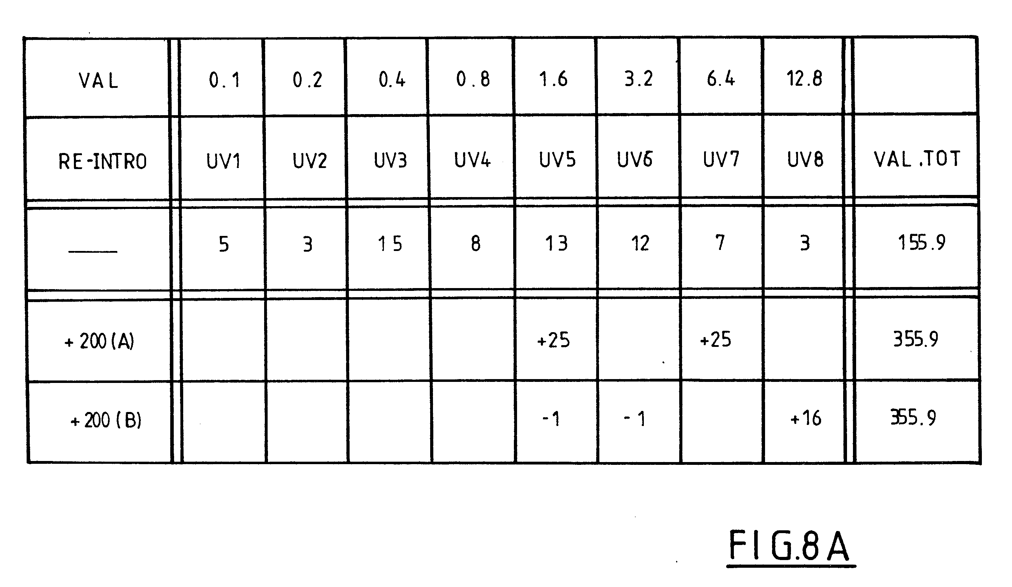

On décrira maintenant en référence à la figure 8 le rechargement d'unités de valeur dans la carte selon l'invention.

Le change automatique qui vient d'être décrit ne nécessite pas impérativement la présence du terminal (sauf si les moyens de calcul incorporés à la carte ne lui permettent pas de l'effectuer seul). Par contre, tant le chargement initial d'unités de valeur que le rechargement d'unités de valeur impliquent la coopération entre la carte et le terminal.

Avec une mémoire de technologie e$^2$pROM, le rechargement est semblable au chargement initial : on ajoute la valeur résiduelle de la carte à la valeur que l'on veut y transférer (dûment certifiée). Après effacement, la mémoire peut alors être entièrement reconfigurée, comme lors du chargement initial décrit plus haut.

Cet effacement est impossible avec une mémoire de technologie epROM. On décrira donc maintenant d'autres procédés, qui d'ailleurs s'appliquent aux deux technologies.

Tout d'abord, on peut considérer un rechargement comme un chargement initial qui ajouterait de nouveaux mots de valeur disjoints de ceux existants, de la manière décrite plus haut.

Avantageusement, ce mécanisme de type chargement initial peut être remplacé par la génération de bits de valeur aux niveaux 8, 7 et/ou 6, en recherchant la valeur par excès la plus proche qui permet d'obtenir un nombre maximal de bits de valeur engendrés, tout en minimisant le nombre de mots de valeur validés. L'ajustement du montant rechargé à la somme désirée est effectué par débit de la différence entre la valeur du ou des mots validés et la valeur du montant de rechargement.

Ce débit est effectué comme s'il s'agissait d'une transaction de paiement.

La valeur de rechargement est choisie par le porteur, et peut être comprise par exemple entre 30 francs et 600 francs, pour le porte-monnaie électronique de la figure 5.

La figure 8 résume les moyens optimaux de rechargement, en fonction de l'intervalle où se trouve la valeur rechargée choisie. A cet égard, comme la valeur à réintroduire augmente lorsqu'on lit la figure 8 du haut vers le bas, cette figure définit ainsi une suite d'intervalles de valeur de rechargement possible.

Si la valeur à recharger est inférieure ou égale à 40 francs, on validera un mot de vingt cinq unités de valeur de niveau 5 (pour 40 francs), puis on consommera les bits nécessaires pour ramener la valeur rechargée au montant désiré, et l'on confirmera bien entendu le bit de validation (cette opération est effectuée systématiquement à la création d'un mot de valeur, mais elle n'est pas rappelée à chaque fois dans la présente description).

La même technique est appliquée si le montant à charger est compris entre 40 et 80, mais avec vingt cinq bits de valeur de niveau UV6.

On pourrait faire systématiquement de même si le montant à recharger est compris entre 80 et 160, avec les unités de valeur UV7. Toutefois, comme le montre la figure 8, si le montant à recharger est compris entre 80 et 120, et qu'il reste moins de la moitié des bits de valeur au niveau UV5 ou bien au niveau UV6, on préfèrera charger deux mots de ces mêmes niveaux, plutôt qu'un seul du niveau UV7. Il s'agit là toutefois d'une faculté qui n'est pas strictement nécessaire à la mise en oeuvre de la présente invention.

Le reste du tableau se lit de la même manière, jusqu'au niveau 320 francs. L'option précitée à propos du niveau 120 existe aussi pour les niveaux 200 et 240. Au-delà de 320, il est actuellement considéré comme préférentiel de rechercher le nombre minimum de mots de valuer à charger, puis la combinaison d'unités de valeur satisfaisant cette condition tout en privilégiant les unités de valeur les plus faibles. Dans l'exemple décrit, pour les montants supérieurs à 320 francs, on chargera :
- des bits de valeur UV5 et UV8 si le montant est inférieur ou égal à 360,
- des bits de valeur UV6 et UV8 si le montant est inférieur ou égal à 400,
- des bits de valeur UV7 et UV8 si le montant est inférieur ou égal à 480,
- des bits de valeur UV5, UV7 et UV8 si le montant est inférieur ou égal à 520,
- des bits de valeur UV6, UV7 et UV8 si le montant est inférieur ou égal à 560, et
- des bits de valeur UV5, UV6, UV7 et UV8 si le montant est inférieur ou égal à 600.

La figure 8A permet de mieux comprendre l'intérêt d'utiliser des niveaux intermédiaires comme celui de 200 qui apparaît sur la figure 8.

On suppose que l'état avant rechargement du porte-monnaie électronique est celui illustré sur la première ligne des chiffres de la figure 8A, pour une valeur totale de 155,90 francs.

Dans le premier cas, on charge 200 francs sous la forme de vingt cinq unités de valeur d'une part pour le rang UV5, d'autre part pour le rang UV7. La carte est alors relativement enrichie en "monnaie".

Dans le second cas, on charge seize unités de valeur de rang UV8, et l'on consomme une unité de valeur des rangs UV5 et UV6. Ces niveaux, qui étaient déjà bien remplis, ne se trouvent pas trop pénalisés. Le porteur sera moins gêné pour les transactions de niveaux élevés, puisqu'il reste beaucoup de bits de rang UV8 à consommer.

Cependant, pour la plupart des applications, il sera rare d'utiliser le porte-monnaie électronique pour des transactions d'un montant proche de sa valeur maximale. C'est pourquoi la première façon d'opérer (ligne marquée (A)) sur la figure 8A apparaît préférable, même si elle nécessite la validation de deux mots.

Cet exemple montre l'intérêt des décompositions condition nelles apparaissant sur les niveaux 120, 200 et 240 de la figure 8.

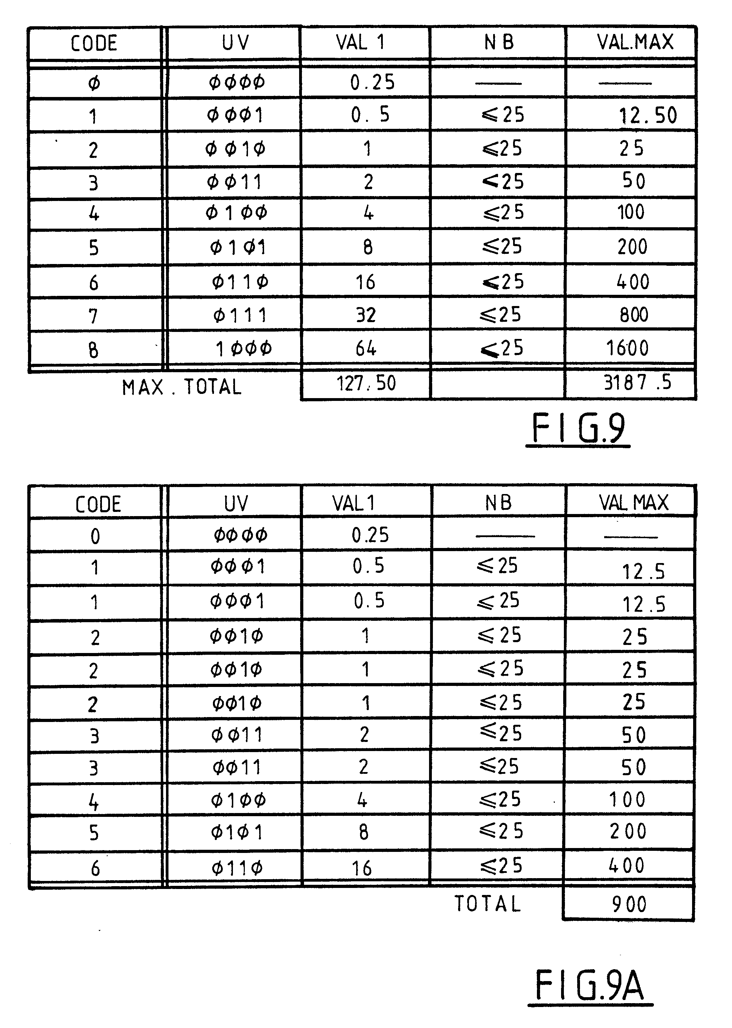

On écrira maintenant en référence aux figures 9 et 9A un autre exemple d'application du porte-monnaie électronique selon l'invention.

Ici, on considère que les transactions exprimées en centimes seront rares, l'unité considérée étant plus proche du franc. Dans ce cas, l'unité de valeur de base est 0,50 franc. En chargeant jusqu'à vingt cing bits de valeur pour les niveaux 1 à 8, on obtient une valeur globale du porte-monnaie égale à 3187,50 francs.

L'homme de l'art comprendra qu'on peut avoir plus d'un mot de valeur pour chaque niveau d'unités de valeur. Ceci est illustré sur la figure 9A, avec la même échelle d'unités de valeur que pour la figure 9. On a ici deux mots de valeur pour l'unité UV1, trois pour l'unité UV2, deux pour l'unité UV3, et un mot pour chacune des unités de valeur UV4 à UV6. La valeur totale de la carte est de 900 francs.

Comme déjà indiqué, l'invention s'applique particulièrement bien à la carte de la figure 1, celle-ci possédant un microprocesseur interne capable d'effectuer lui-même toutes les opérations relatives aux transactions ainsi qu'au chargement et au rechargement d'unités de valeur, et au change automatique. Il n'a alors besoin de recevoir du terminal que la validation du crédit du porteur de la carte pour le montant à charger. En elle-même, cette validation comportera en général un certificat qui permettra à la carte d'authentifier l'entité habilitée à garantir les valeurs monétaires chargées, et peut nécessiter la présentation d'un code confidentiel. Par contre, toutes les opérations de transactions, ainsi que le change automatique, peuvent s'effectuer à l'intérieur de la carte et sans aucun besoin de contrôle de code confidentiel ni d'autres dispositions de sécurité.

Lorsqu'on utilise une carte selon la figure 2, du moins en sa technologie actuelle, certaines des fonctions nécessaires au chargement et/ou au rechargement de mots ne sont pas forcément exécutables dans la carte elle-même. Les moyens de calcul 112 du terminal peuvent alors être mis à contribution. Il peut en être de même pour le change automatique. On comprendra bien entendu que la carte peut coopérer avec deux types de terminaux, les uns hautement sécurisés installés par exemple dans les banques et possédant la faculté de charger ou de recharger la carte (ainsi que de participer au change automatique si nécessaire), tandis que les autres, implantés chez les commerçants ou en tous lieux où une simple transaction peut être effectuée, n'ayant pour fonction que d'accepter une transaction en échange de la consommation de bits de valeur dans la carte, cette fois sans les mêmes contraintes de sécurité.

Dans ce qui précède, on vient d'indiquer que la présentation d'un code confidentiel n'est pas nécessaire pour l'usage du porte-monnaie électronique. Elle peut cependant être envisagée.

Elle le sera notamment lorsque le porte-monnaie électronique devient un portefeuille électronique, c'est-à-dire qu'il contient une valeur plus importante.

A titre d'exemple, on pourrait constituer un portefeuille électronique possédant les caractéristiques suivantes :
- unité de valeur 1001 pour des bits de valeur de 50 francs chacun,
- unité de valeur de 1010 pour des bits de valeur de 100 francs chacun,
- unité de valeur de 1011 pour des bits de valeur de 200 francs chacun,
unité de valeur 1100 pour des bits de valeur de 400 francs chacun.

A partir de là, il est possible d'engendrer les niveaux de valeur complémentaires suivants :
- 1000 pour des bits de valeur de 25 francs chacun et
- 1101 pour des bits de valeur de 800 francs chacun.

A cet égard, on remarquera que l'un des bits prévu pour le codage de l'unité de valeur n'est pas nécessaire, puisque trois bits utiles suffisent à coder jusqu'à huit niveaux d'unités de valeur. Le quatrième bit peut servir pour caractériser le porte-monnaie ou le portefeuille électronique de l'invention, le cas échéant.

Bien entendu, la présente invention n'est pas limitée au mode de réalisation décrit. Elle peut être étendue par l'homme de l'art de diverses manières.

On peut notamment prévoir dans la même carte la coexistence de plusieurs zones de mémoire définissant chacune un porte-monnaie électronique pour une gamme de montant de transactions particulières, et/ou de portefeuille électronique obéissant à la même condition.

Lorsque la carte ne contient qu'une valeur résiduelle très faible insusceptible de convenir à une transaction, son remboursement en espèces peut être effectué, après mise en oeuvre de mesures de sécurité comme la présentation du code confidentiel.

Il est également envisageable que la carte soit consacrée à des transactions avec un prestataire particulier, qui peut être identifié dans la carte d'une façon sécuritaire.

En pratique, on définira le plus souvent une "durée de vie" de la carte, le nombre de rechargements possible dans la carte étant par exemple fixé à l'avance. Ces données peuvent être fixées à la première personnalisation de la carte.

Le codage en mémoire de la valeur de l'unité monétaire peut s'effectuer en mode complément à deux, ou en tout autre moyen permettant que la modification du code écrit ne puisse altérer sa valeur que dans le sens d'une unité monétaire plus faible.

Lors d'une transaction, après avoir consommé les bits de valeur correspondant au débit à effectuer, la carte à microprocesseur pourra renvoyer au terminal du commerçant un certificat de transaction qui peut être exécuté grâce à la fonction de calcul de la carte, en utilisant par exemple une clé secrète diversifiée, protégée dans la carte.

Pour certaines applications au moins, on procédera à une authentification de la carte par le terminal (de débit) et/ou du terminal (de débit) par la carte. L'authentification est systématique avec les terminaux hautement sécurisés.

Divers procédés de chiffrement sont disponibles pour réaliser les fonctions ci-dessus en sécurité.

Enfin, le terminal pourra également disposer d'une liste des cartes interdites, à la manière de ce qui se fait actuellement pour les cartes bancaires.

Par ailleurs, des variantes sont concevables au niveau de la structure de base du "porte-monnaie" électronique, suivant les applications. Par exemple, l'unité de valeur de base étant 0,5F, on peut prévoir 10 mots de valeur de 16 bits, à raison de 2 mots pour chacune des valeurs 0,5F, 1F, 2F, 4F, un mot de valeur à 8F et un mot de valeur à 16F. Chaque mot de 16 bits contient ici 16 bits de valeur et la valeur associée est simplement définie par l'adressage en mémoire.

Le traitement de "validation" ne fait plus ici intervenir un bit de validation dans chaque mot de valeur. Il est concrétisé par l'adresse du premier mot de valeur, le nombre de ceux-ci, et leurs valeurs respectives, l'ensemble pouvant être défini de manière implicite.

Enfin, les cartes selon l'invention sont utilisables pour toute unité monétaire. Elles ont l'avantage de permettre des traitements dans l'unité de compte européenne dite ECU.

On donnera ci-après un exemple permettant de mieux comprendre la variante de l'invention relative au changement de la carte à micro-circuits.

Par les techniques classiques et connues des cartes à puces, on peut charger dans une carte par exemple la somme de 800,- F., certifiée par des moyens connus sur lesquels il n'est pas nécessaire de s'expliquer ici.

A côté de cela, de la manière décrite ci-avant, on peut créer un porte-monnaie électronique ayant la structure définie par la figure 5. Le cumul des bits de valeur s'établit à 637,50 F. Cette valeur est donc inférieure au montant préchargé dans la carte.

On pourrait également précharger la carte avec seulement 500,- F., et vérifier au fur et à mesure des débits que le montant cumulé des seuls débits déjà effectués n'excède pas les 500,- F. préchargés, même si le montant maximal des débits cumulés qui est possible avec le porte-monnaie électronique peut atteindre la valeur de 637,50 F., qui est supérieure à 500,- F.

Lorsque tous les bits de valeur de rang 1 ont été consommés, il est naturellement possible de reconstituer complètement un mot de valeur de rang 1 (en référence à la figure 5), pourvu que la somme préchargée dans la carte forme toujours contrepartie. Mais on peut aussi refaire complètement l'échelle des mots de valeur, après avoir déduit de la somme préchargée le cumul des bits de valeur consommés.

Les mêmes précautions de sécurité qu'au système décrit ci-avant sont à prendre, c'est-à-dire qu'il faut que chaque écriture d'un bit corresponde nécessairement à la consommation d'une certaine somme d'argent, et non l'inverse, et ceci compte tenu de la logique de fonctionnement du microprocesseur.

Lorsqu'on désire procéder à un rechargement complet de la carte, en tant que "porte-monnaie", il suffit de calculer le montant cumulé des débits effectués dans sa zone "porte-monnaie", de retrancher celui-ci de la somme préchargée antérieure, et d'ajouter éventuellement au résultat un complément de sommes préchargées ou provisions. Le total est alors inscrit comme nouvelle somme préchargée, et permet, comme précédemment, la constitution d'une zone de "porte-monnaie" avec l'échelonnement des unités de valeur décrit ci-avant.

La carte va se trouver ainsi munie d'une zone de "crédit", de structure classique, et d'une zone de "débit", possédant la structure décrite ci-avant. L'intérêt de traiter ces deux zones de manière séparée est également que l'on peut leur appliquer des procédés de sécurisation et/ou chiffrement différents.

La sécurisation attachée au crédit sera naturellement plus forte que celle attachée au débit, puisque l'écriture d'un bit de débit ne peut que diminuer la valeur de la carte.

Un autre avantage de la variante de l'invention relative au changement de la carte à micro-circuits réside en ce que la valeur préchargée dans la carte peut servir non seulement comme contrepartie du porte-monnaie électronique de la présente invention, mais aussi comme contrepartie pour d'autres types de transaction logés dans la même carte.

Bien entendu, la variante de l'invention relative au changement de la carte à micro-circuits peut faire l'objet de toutes les variantes déjà décrites ci-avant.

On relèvera notamment que les moyens de traitement et de calcul évoqués ci-dessus peuvent être soit en partie logés dans le terminal, soit totalement logés dans la carte.

## Revendications

1. Système de transaction, du type comprenant au moins un terminal (1) et une carte à microcircuits (2) propre à coopérer avec ce terminal, cette carte comprenant une mémoire à écriture permanente, dont certains bits au moins se voient affecter une unité de valeur, comsommable par écriture, caractérisé en ce que la mémoire (20; 220) contient une zone de codage (252) permettant de définir au moins une valeur de base à partir de laquelle peut être établie une suite d'unités de valeur, échelonnées suivant les puissances successives de 2, ainsi qu'une pluralité de mots de valeur (251), associés chacun à l'une des unités de valeur, et contenant un nombre prédéterminé de bits de valeur possédant cette même unité de valeur, et en ce que le système comprend des moyens de calcul (21; 112) propres à décomposer un montant monétaire en binaire par rapport à ladite valeur de base, et à établir des commandes pour écrire ou non un bit de valeur dans chacun desdits mots de valeur en fonction du bit de poids correspondant, dans ladite décomposition, les bits de poids supérieur restants servant le cas échéant à l'écriture dans le mot de valeur de poids le plus élevé.

2. Système selon la revendication 1, caractérisé en ce que la zone de codage (252) définit au moins quatre, de préférence au moins six unités de valeur consécutives.

3. Système selon l'une des revendications 1 et 2, caractérisé en ce que chaque mot contient une sous-zone de codage (252-1) définissant l'unité de valeur qui lui est associée, la zone de codage précitée (252) consistant en la réunion de ces sous-zones de codage.

4. Système selon l'une des revendications 1 et 2, caracté risé en ce que la zone de codage (252) est distincte des mots, les unités de valeur des mots étant définies par pointage sur ceux-ci ou par leur adresse.

5. Système selon l'une des revendications précédentes, caractérisé en ce que la zone de codage (252) est agencée pour définir en option une valeur de base moitié, ainsi qu'un mot de valeur correspondant, validable par consommation d'unités de valeur de poids supérieur.

6. Système selon l'une des revendications précédentes, caractérisé en ce que, en l'absence de bits de valeur pour l'unité de valeur de base (252-1), les moyens de calcul sont propres à régénérer un mot de valeur correspondant à cette unité de valeur en contrepartie de l'écriture d'un bit de valeur sur au moins une unité de valeur de poids supérieur.

7. Système selon l'une des revendications précédentes, caractérisé en ce que, en l'absence de bits de valeur pour une unité de valeur de poids faible (252-2 à 252-4), et lorsque le nombre d'unités de valeur de poids immédiatement inférieur tombe au-dessous d'un seuil prédéterminé, les moyens de calcul sont propres à régénérer un mot de valeur correspondant à cette unité de valeur en contrepartie de l'écriture d'un bit de valeur sur au moins une unité de valeur de poids supérieur.

8. Système selon l'une des revendications précédentes, caractérisé en ce que, en l'absence de bits de valeur pour une unité de valeur de poids élevé (252-5) et pour l'unité de valeur de poids immédiatement supérieur, et lorsque le nombre d'unités de valeur de poids maximal est supérieur à un seuil prédéterminée, les moyens de calcul sont propres à régénérer un mot de valeur correspondant à cette unité de valeur en contrepartie de l'écriture d'un bit sur au moins une unité de valeur de poids supérieur.

9. Système selon l'une des revendications précédentes caractérisé en ce qu'il possède un mode de chargement de la carte, par une somme désirée, ce mode consistant en la création de l'ensemble desdits mots de valeur (251), avec tous leurs bits valables, et en la consommation immédiate par écriture d'une somme égale à la différence entre les valeurs maximum de la carte et ladite somme désirée.

10. Système selon l'une des revendications précédentes, caractérisé en ce qu'il possède un mode de rechargement de la carte, par une somme désirée, ce mode consistant en la création d'au moins un mot de valeur (MV) des poids les plus élevés, par excès, et en la consommation immédiate par écriture d'une somme égale à cet excès.

11. Système selon la revendication 10, caractérisé en ce que le mot de valeur créé (MV) est choisi en fonction de la relation entre ladite somme désirée et la valeur maximale de chaque mot.

12. Système selon la revendication 11, caractérisé en ce que le ou les mots de valeur créés (MV) sont également choisis en fonction de la relation entre la somme désirée et la somme des valeurs maximales de plusieurs mots associés à des unités de valeur différentes, et en fonction du nombre de bits de valeur restants pour ces mêmes unités de valeur.

13. Système selon l'une des revendications précédentes, caractérisé en ce que les mots de valeur (MV) possèdent chacun un nombre entier d'octets.

14. Système selon l'une des revendications 1 à 13, caractérisé en ce que les moyens de calcul (21) sont entièrement logés dans la carte.

15. Système selon l'une des revendications 1 à 13, caractérisé en ce que les moyens de calcul (112) sont au moins en partie logés dans le terminal.

16. Système de transaction selon l'une des revendications 1 à 15, caractérisé en ce qu'il comprend en outre des moyens de traitement pour précharger la carte par une somme désirée, exprimée en unités monétaires courantes et certifiées, et des moyens propres à vérifier que la valeur cumulée des débits suivant lesdites unités de valeur demeure au plus égale à la somme ainsi préchargée.

17. Système selon la revendication 16, caractérisé en ce que, en l'absence de bits de valeur pour une unité de valeur donnée, les moyens de traitement sont propres à régéner le mot de valeur correspondant à cette unité de valeur tant que ladite somme préchargée forme contrepartie.

18. Système selon la revendication 16, caractérisé en ce qu'il comporte des moyens pour déduire de la somme préchargée le montant cumulé des bits de valeur consommée.

FIG.1

FIG.2

FIG.3

FIG.4

| CODE | UV | VAL 1 | NB | VAL.MAX |
|------|------|-------|------|---------|
| $\phi$ | $\phi\phi\phi$ | 0.05 | — | — |
| 1 | $\phi\phi\phi1$ | 0.10 | $\leq 25$ | 2.5 |
| 2 | $\phi\phi1\phi$ | 0.20 | $\leq 25$ | 5 |
| 3 | $\phi\phi11$ | 0.40 | $\leq 25$ | 10 |
| 4 | $\phi1\phi\phi$ | 0.80 | $\leq 25$ | 20 |
| 5 | $\phi1\phi1$ | 1.60 | $\leq 25$ | 40 |
| 6 | $\phi11\phi$ | 3.20 | $\leq 25$ | 80 |
| 7 | $\phi111$ | 6.40 | $\leq 25$ | 160 |
| 8 | $1\phi\phi\phi$ | 12.80 | $\leq 25$ | 320 |
| MAX. TOTAL | | 25.50 | | 637,5 |

## FIG.5

| CODE | UV | VAL | NB | VAL.MAX. |
|------|------|-----|------|----------|
| $\phi$ | $\phi\phi\phi$ | 0.05 | — | — |
| 1 | $\phi\phi\phi1$ | 0.1 | $\leq 25$ | 2.5 |
| 2 | $\phi\phi1\phi$ | 0.2 | $\leq 25$ | 5 |
| 3 | $\phi\phi11$ | 0.4 | $\leq 25$ | 10 |
| 4 | $\phi1\phi\phi$ | 0.8 | $\leq 25$ | 20 |
| 5 | $\phi1\phi1$ | 1.6 | $\leq 25$ | 40 |
| 6 | $\phi11\phi$ | 3.2 | $\leq 25$ | 80 |
| 7 | $\phi111$ | 6.4 | $\leq 25$ | 160 |
| 8 | $1\phi\phi\phi$ | 12.8 | $\leq 25$ | 320 |
| 9 | $1\phi\phi1$ | 25.6 | $\leq 25$ | 640 |
| TOTAL | | 50.10 | | 1277.5 |

## FIG.5A

| INTRO | VAL MAX | DIFF | DIFF / UVB | BIN (DIFF / UVB) | | | |
|---|---|---|---|---|---|---|---|
| 400 | 637.50 | 237.5 | 2375 | 1  001  0 | | 100  0111 | |
| | | | | 8 (18 x) | | 7  321 | CODES |

## FIG.6

| TRANSACTION | TRANS / UVB | BIN (TRANS / UVB) | CODES |
|---|---|---|---|
| 10 | 100 | 0/110  0100 | 7, 6, 3 |
| 15.5 | 155 | 1/001  1011 | 8, 5, 4, 2, 1 |
| 25.9 | 259 | 0001  0/000  0011 | 8 (2x), 2, 1 |
| 49.9 | 499 | 0001  1/111  0011 | 8(3x), 7, 6, 5, 2, 1 |

## FIG.6A

EP 0 345 108 A1

FIG.7

EP 0 345 108 A1

| RE - INTRO | COND. | EXEC | VAL |
|---|---|---|---|
| $\leq 40$ | —— | 25   UV5 | 40 |
| $\leq 80$ | —— | 25   UV6 | 80 |
| $\leq 120$ | NB   UV5 $>12$<br>&NB   UV6 $>12$ | $25 \times$ UV7 | 160 |
|  | NB   UV5 $\leq 12$<br>OU<br>NB   UV6 $\leq 12$ | $25 \times$ UV5<br>+<br>$25 \times$ UV6 | 120 |
| $\leq 160$ | ———— | $25 \times$ UV7 | 160 |
| $\leq 200$ | NB   UV5 $> 12$<br>&NB   UV7 $>12$ | $25 \times$ UV8 | 320 |
|  | NB   UV5 $\leq 12$<br>OU<br>NB   UV7 $\leq 12$ | $25 \times$ UV5<br>+<br>$25 \times$ UV7 | 200 |
| $\leq 240$ | NB   UV6 $>12$<br>&<br>NB   UV7 $>12$ | $25 \times$ UV8 | 320 |
|  | NB   UV6 $\leq 12$<br>OU<br>NB   UV7 $\leq 12$ | $25 \times$ UV6<br>+<br>$25 \times$ UV7 | 240 |
| $\leq 320$ | —— | $25 \times$ UV8 | 320 |
| $>320$ | $\leq 360$<br>$\leq 400$<br>$\leq 480$<br>$\leq 520$<br>$\leq 560$<br>$\leq 600$ | UV5 et UV8<br>UV6 et UV8<br>UV7 et UV8<br>UV5,UV7 et UV8<br>UV6,UV7 et UV8<br>UV5,UV6,UV7 et UV8 | |

# FIG.8

| VAL | 0.1 | 0.2 | 0.4 | 0.8 | 1.6 | 3.2 | 6.4 | 12.8 | |
|---|---|---|---|---|---|---|---|---|---|
| RE-INTRO | UV1 | UV2 | UV3 | UV4 | UV5 | UV6 | UV7 | UV8 | VAL.TOT |
| ——— | 5 | 3 | 15 | 8 | 13 | 12 | 7 | 3 | 155.9 |
| + 200 (A) | | | | | +25 | | +25 | | 355.9 |
| + 200 (B) | | | | | - 1 | - 1 | | +16 | 355.9 |

<u>F I G.8 A</u>

EP 0 345 108 A1

| CODE | UV | VAL 1 | N B | VAL.MAX |
|---|---|---|---|---|
| $\phi$ | $\phi\phi\phi$ | 0.25 | — | — |
| 1 | $\phi\phi$1 | 0.5 | ≤ 25 | 12.50 |
| 2 | $\phi\phi$1$\phi$ | 1 | ≤25 | 25 |
| 3 | $\phi\phi$11 | 2 | ≤25 | 50 |
| 4 | $\phi$1$\phi\phi$ | 4 | ≤25 | 100 |
| 5 | $\phi$1$\phi$1 | 8 | ≤25 | 200 |
| 6 | $\phi$11$\phi$ | 16 | ≤25 | 400 |
| 7 | $\phi$111 | 32 | ≤25 | 800 |
| 8 | 1$\phi\phi\phi$ | 64 | ≤25 | 1600 |
| MAX . TOTAL | | 127.50 | | 3187.5 |

## F I G.9

| CODE | UV | VAL 1 | N B | VAL MAX |
|---|---|---|---|---|
| 0 | $\phi\phi\phi\phi$ | 0.25 | — | — |
| 1 | $\phi\phi\phi$1 | 0.5 | ≤ 25 | 12.5 |
| 1 | $\phi\phi\phi$1 | 0.5 | ≤ 25 | 12.5 |
| 2 | $\phi\phi$1$\phi$ | 1 | ≤ 25 | 25 |
| 2 | $\phi\phi$1$\phi$ | 1 | ≤ 25 | 25 |
| 2 | $\phi\phi$1$\phi$ | 1 | ≤ 25 | 25 |
| 3 | $\phi\phi$11 | 2 | ≤ 25 | 50 |
| 3 | $\phi\phi$11 | 2 | ≤ 25 | 50 |
| 4 | $\phi$1$\phi\phi$ | 4 | ≤ 25 | 100 |
| 5 | $\phi$1$\phi$1 | 8 | ≤ 25 | 200 |
| 6 | $\phi$11$\phi$ | 16 | ≤ 25 | 400 |
| | | | TOTAL | 900 |

## F I G.9A

Office européen
des brevets

RAPPORT DE RECHERCHE EUROPEENNE

Numero de la demande

EP 89 40 1304

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | FR-A-2 403 597 (CII-HB) <br> * Revendications; figures 1-3,9; page 3, ligne 7 - page 4, ligne 18 * <br> --- | 1-5,15-17 | G 07 F 7/08 |
| A | FR-A-2 503 423 (FLONIC) <br> * Revendications; figure 2; page 13, ligne 1 - page 15, ligne 30; page 17, ligne 13 - page 20, ligne 29 * <br> --- | 1-4,6-10,13, 15,16, 18 | |
| P,A | DE-A-3 643 466 (R. BOSCH) <br> * En entier * <br> ----- | 1,16,18 | |

| | DOMAINES TECHNIQUES RECHERCHES (Int. Cl.4) |
|---|---|
| | G 07 F <br> G 06 K |

Le présent rapport a été établi pour toutes les revendications

| Lieu de la recherche | Date d'achèvement de la recherche | Examinateur |
|---|---|---|
| LA HAYE | 28-07-1989 | DAVID J.Y.H. |